# FASCICULE DE BREVET EUROPEEN

(11) **EP 3 560 163 B1**
(45) Date de publication et mention de la délivrance du brevet: **30.07.2025**
(21) Numéro de dépôt: 17822425.9
(22) Date de dépôt: 14.12.2017
(51) Int. Cl.: H04L 9/40, H04L 61/4511, H04L 67/563

(54) **VALIDATION DE LIVRAISON DE CONTENU ET DE VERIFICATION D'UNE DELEGATION DE LIVRAISON D'UN CONTENU**
VALIDIERUNG DER BEREITSTELLUNG VON INHALT UND ÜBERPRÜFUNG EINER DELEGATION DER BEREITSTELLUNG EINES INHALTS
VALIDATION OF CONTENT DELIVERY AND VERIFICATION OF A DELEGATION OF DELIVERY OF A CONTENT

(30) Priorité: 23.12.2016 FR 1663343
(43) Date de publication de la demande: 30.10.2019
(73) Titulaire: Orange, 92130 Issy-les-Moulineaux (FR)
(72) Inventeur: FIEAU, Frédéric, 92326 Châtillon Cedex (FR); STEPHAN, Emile, 92326 Châtillon Cedex (FR)
(74) Mandataire: Vidon Brevets & Stratégie
(86) Numéro de dépôt international: PCT/FR2017/053579
(87) Numéro de publication internationale: WO 2018/115647

(56) Documents cités:
- WO-A1-2014/124692
- CN-A- 102 035 809
- US-A1- 2007 261 112
- US-A1- 2010 031 041
- US-A1- 2010 121 981

## Description

### 1 DOMAINE TECHNIQUE

La présente invention se rapporte au domaine de la vérification de délégation de livraison d'un contenu depuis un serveur d'un fournisseur de contenu vers un serveur de livraison qui va effectivement effectuer la livraison du contenu à un terminal client.

Plus précisément, la présente invention se rapporte à une technique de sécurisation d'une telle délégation.

L'invention a de nombreuses applications, notamment mais non exclusivement dans le domaine de la diffusion de contenus multimédia (e.g. du type contenant un ou plusieurs flux audio et/ou vidéo, un fichier exécutable, une page internet, etc.) où une substitution frauduleuse de contenu délivré peut être particulièrement problématique.

### 2 ARRIÈRE-PLAN TECHNOLOGIQUE

Lorsqu'un utilisateur cherche à obtenir un contenu auprès d'un fournisseur de contenu via un terminal client de l'utilisateur, le terminal client envoie une requête à un serveur du fournisseur de contenu afin d'obtenir le contenu en question.

Classiquement, la livraison du contenu est déléguée par le serveur du fournisseur de contenu à un serveur de livraison. Ainsi, en réponse à la requête du terminal client, le serveur du fournisseur de contenu envoie au terminal client un message de réponse contenant le nom de domaine du serveur de livraison auprès duquel le terminal client peut obtenir le contenu.

De la sorte, le terminal client peut obtenir l'adresse réseau (e.g. une adresse IP selon le protocole internet) du serveur de livraison en question auprès d'un serveur de résolution de nom de domaine (DNS pour Domain Name Server en anglais) sur la base du nom de domaine fourni par le serveur du fournisseur de contenu. Il est notable que dans certaines applications, le serveur de résolution de nom de domaine en question est un serveur de résolution de nom de domaine local au fournisseur d'accès réseau. Ce serveur local obtient alors les informations globales de correspondance entre les noms

de domaine existants et les adresses réseau (par exemple selon le protocole internet) auprès d'un serveur de résolution de nom de domaine autoritaire. Il est fait mention de la publication US2010/121981-A1, qui décrit un procédé de délivrance de données comme il est réalisé dans des systèmes connus .

D'autres procédés similaires se trouvent dans les publications US2007/261112-A1, US2010/031041-A1 et WO 2014/124692 A2, pour donner quelques exemples en sus.

Cependant, dans certaines situations, la livraison du contenu est effectuée dans un contexte de délégations multiples.

Par exemple, dans un contexte de double délégation, l'adresse réseau fournie par le serveur de résolution de nom de domaine (éventuellement local comme discuté ci-dessus) n'est pas celle d'un serveur, dit primaire, de livraison (i.e. le serveur qui effectuerait effectivement la livraison en cas de délégation simple depuis le serveur du fournisseur de contenu vers ce serveur de livraison), mais celle d'un serveur secondaire de livraison sur lequel le contenu est disponible. Dans ce cas, la livraison est également déléguée par le serveur primaire de livraison au serveur secondaire de livraison en question.

Dans d'autres configurations, la deuxième délégation peut être suivie d'une troisième délégation vers un serveur tertiaire de livraison sur lequel le contenu est disponible et qui va effectivement effectuer la livraison au terminal client, et ainsi de suite. De la sorte, des configurations de délégations multiples peuvent être envisagées.

Le point commun à tous ces modes de délégation de livraison est la nécessité de passer par un serveur de résolution de nom de domaine afin d'obtenir l'adresse du serveur de livraison qui doit effectivement effectuer la livraison du contenu au terminal client. Or, un tel serveur peut s'avérer être faiblement sécurisé dans les faits. Par ailleurs, le protocole DNS lui-même est par nature peu sécurisé. Ainsi, le cache d'un tel serveur de résolution de nom de domaine peut avoir été corrompu (e.g. via une attaque par empoisonnement du cache). Par exemple, dans un contexte de double délégation, l'adresse d'un serveur secondaire de livraison frauduleux a pu être substituée à l'adresse du serveur secondaire de livraison authentique auquel le serveur de livraison primaire souhaitait déléguer la livraison du contenu.

Lorsque l'adresse du serveur secondaire de livraison renvoyée correspond à celle d'un serveur de livraison frauduleux, l'utilisateur va potentiellement accéder à un contenu non désiré délivré par le serveur de livraison frauduleux. Ce contenu frauduleux ne correspondra alors pas à sa requête initiale. Ceci peut être particulièrement gênant pour l'utilisateur, par exemple lorsque les contenus requis sont destinés aux enfants, ou lorsque le contenu effectivement reçu contient un logiciel espion (destiné par exemple à infecter le terminal client ou à capturer de l'information privée).

La même problématique se pose lorsque le terminal client obtient un contenu depuis le serveur primaire de livraison, c'est-à-dire lorsque le serveur primaire de livraison n'a pas délégué la livraison du contenu à un serveur secondaire de livraison.

Il existe donc un besoin pour améliorer l'état de l'art.

### 3 RESUME

Dans un mode de réalisation de l'invention, il est proposé un procédé de validation d'une livraison d'un contenu à un terminal client selon la revendication 1.

Ainsi, la technique décrite propose une solution nouvelle et inventive pour permettre la validation, par le terminal client, de la livraison d'un contenu, notamment lorsque la livraison du contenu est déléguée depuis un serveur d'un fournisseur de contenu vers un serveur de livraison qui va effectivement effectuer la livraison du contenu au terminal client.

Pour ce faire, la technique décrite prévoit la validation de l'adresse du serveur de livraison reçue par le terminal client (i.e. l'adresse du serveur effectuant concrètement la livraison du contenu, et qui est potentiellement un serveur frauduleux, auprès du terminal client) à partir d'une information qu'il reçoit du serveur du fournisseur de contenu.

Ainsi, le terminal client sait si le serveur de livraison dont il a reçu l'adresse a effectivement reçu une délégation de livraison de contenu depuis le serveur du fournisseur de contenu (et donc s'il s'agit bien du serveur de livraison correspondant à l'adresse authentique), ou si c'est un serveur frauduleux. Le terminal client peut ainsi réagir en conséquence, par exemple en interrompant la réception du contenu ou en ne poursuivant pas l'établissement d'une connexion avec ce serveur frauduleux.

Le serveur d'adresses est par exemple un serveur de résolution de nom de domaine. Un tel serveur de résolution de nom de domaine permet d'obtenir à partir d'une requête comprenant une information relative au serveur de livraison, l'adresse IP associée dans le serveur de résolution de nom de domaine à l'information relative au serveur de livraison. Une telle information relative au serveur de livraison peut correspondre à un nom de domaine associé au serveur de livraison, à une URL (pour « Uniform Ressource Locator » en anglais), à une adresse IP, ou à toute combinaison de ces informations. La requête émise par le terminal client vers le serveur de résolution de nom peut correspondre à tout type de demandes interprétables pour un tel serveur permettant à partir d'une information comprise dans la requête d'obtenir une adresse permettant d'accéder au serveur de livraison de contenu effectif.

Selon un mode de réalisation du procédé de validation, l'information comprend l'adresse authentique et la détermination de la validité de l'adresse reçue par rapport à l'adresse authentique comprend en outre la comparaison de l'adresse reçue et de l'adresse authentique.

Ainsi, le terminal client a la connaissance de l'adresse authentique, lui permettant par là-même de vérifier l'authenticité du serveur secondaire de livraison destiné à la livraison effective du contenu.

Selon l'invention, la détermination de la validité de l'adresse reçue par rapport à l'adresse authentique comprend en outre, préalablement à la réception de l'information, l'envoi d'une requête au serveur du fournisseur de contenu comprenant l'adresse reçue identifiant le serveur de livraison afin de recevoir l'information, l'information correspondant à au moins un champ de données positionné à une valeur indiquant si l'adresse reçue est égale à l'adresse authentique.

Ainsi, la vérification de la concordance entre l'adresse reçue et de l'adresse authentique est faite par le serveur du fournisseur de contenu, simplifiant par là-même les traitements effectués par le terminal client.

Selon un mode de réalisation du procédé de validation, le procédé de validation comprend en outre la réception d'un message comprenant au moins une donnée permettant de mettre en œuvre la détermination de la validité de l'adresse reçue par rapport à l'adresse authentique, en réponse à une requête du terminal client vers le serveur de fournisseur de contenu pour obtenir le contenu.

Ainsi, le fournisseur de contenu garde le contrôle sur la mise en œuvre de la validation de la délégation de livraison par le terminal client.

Par ailleurs, le fournisseur de contenu peut également indiquer de la sorte au terminal client si pour la mise en œuvre des étapes suivantes liées à la détermination de la validité de l'adresse reçue par rapport à l'adresse authentique, ce dernier va devoir envoyer les requêtes correspondantes au serveur du fournisseur de contenu ayant répondu à la présente requête du terminal client pour obtenir le contenu, ou bien à un autre serveur du fournisseur de contenu.

Selon un mode de réalisation du procédé de validation, la au moins une donnée comprend au moins des instructions de code permettant d'implémenter la détermination de la validité de l'adresse reçue par rapport à l'adresse authentique.

Ainsi, les terminaux clients connus (e.g. équipés d'un navigateur internet connu) peuvent mettre en œuvre la technique décrite, les moyens supplémentaires nécessaires à cette mise en œuvre leurs étant fournis par le serveur du fournisseur de contenu.

Selon un mode de réalisation du procédé de validation, la au moins une donnée comprend au moins un autre champ de données positionné à une valeur indiquant au terminal client d'effectuer la détermination de la validité de l'adresse reçue par rapport à l'adresse authentique.

Ainsi, le trafic entre le terminal client et le serveur du fournisseur de contenu est minimisé, les moyens supplémentaires nécessaires à la mise en œuvre de la technique décrite étant déjà présents dans le terminal client.

Selon un mode de réalisation du procédé de validation, le procédé de validation comprend en outre le téléchargement du contenu livré par un serveur de livraison identifié par l'adresse reçue, la livraison étant effectuée via une connexion sécurisée TLS (pour « Transport Layer Security » en anglais) basée sur un certificat du nom de domaine, la détermination de la validité de l'adresse reçue par rapport à l'adresse authentique étant mise en œuvre lorsque le certificat est auto signé par le serveur de livraison identifié par l'adresse reçue.

Ainsi, la vérification par le terminal client n'est effectuée que lorsqu'il y a suspicion sur la nature du serveur de livraison secondaire.

Dans un autre mode de réalisation de l'invention, il est proposé un procédé de vérification d'une délégation de livraison d'un contenu à un terminal client selon la revendication 7.

Ainsi, la technique décrite propose une solution nouvelle et inventive pour permettre la vérification, par le serveur du fournisseur de contenu, de la délégation de livraison d'un contenu vers un serveur de livraison qui va effectivement effectuer la livraison du contenu au terminal client.

Pour ce faire, la technique décrite prévoit que le serveur du fournisseur de contenu obtienne l'adresse authentique du serveur de livraison auquel il a délégué la livraison du contenu.

Sur la base de cette information, la vérification de l'adresse du serveur de livraison reçue par le terminal client (i.e. le serveur effectuant concrètement la livraison du contenu, et qui est potentiellement un serveur frauduleux, auprès du terminal client) peut être effectuée afin de permettre au terminal utilisateur de valider la délégation de livraison du contenu et réagir en conséquence.

Selon un mode de réalisation du procédé de vérification, l'information envoyée au terminal client correspond à l'adresse authentique.

Ainsi, le terminal utilisateur a la connaissance de l'adresse authentique, lui permettant par là-même de vérifier l'authenticité du serveur secondaire de livraison destiné à la livraison effective du contenu.

Selon l'invention, le procédé de vérification comprend en outre :
- la réception d'au moins une requête envoyée par le terminal client, la au moins une requête comprenant l'adresse reçue ; et
- la comparaison de l'adresse reçue et de l'adresse authentique pour délivrer l'information envoyée au terminal client, l'information envoyée au terminal client correspondant à au moins un champ de données positionné à une valeur indiquant si l'adresse reçue est égale à l'adresse authentique.

Ainsi, la vérification de la concordance entre l'adresse reçue et l'adresse authentique est faite par le serveur du fournisseur de contenu, simplifiant par là-même les traitements par le terminal client.

Selon un mode de réalisation des procédés de validation et de vérification, la livraison est déléguée par le serveur de livraison à au moins un serveur secondaire de livraison, l'adresse authentique identifiant le serveur secondaire de livraison étant mémorisée dans le serveur de livraison.

Ainsi, la technique décrite s'applique au cas de délégations multiples, le serveur de livraison (uCDN) devenant dans ce cas un serveur primaire de livraison délégant la livraison du contenu à au moins un serveur secondaire de livraison (dCDNa).

Selon un mode de réalisation des procédés de validation et de vérification, l'adresse authentique appartient au groupe comprenant :
- une adresse prédéterminée stockée sur le serveur de livraison ;
- une adresse prédéterminée stockée sur le serveur du fournisseur de contenu ;
- une adresse obtenue par le serveur du fournisseur de contenu auprès du serveur de livraison pour le contenu ; et
- une adresse préalablement obtenue par le serveur du fournisseur de contenu auprès du serveur de livraison pour le contenu et mise à jour périodiquement auprès du serveur de livraison.

Ainsi, l'adresse authentique peut être soit prédéterminée, permettant une sécurisation optimale et une minimisation des échanges entre entités, soit obtenue auprès du serveur de livraison (uCDN) de manière à permettre la mise en œuvre de la technique décrite en présence d'une évolution dans le temps de l'adresse authentique.

Dans un autre mode de réalisation de l'invention, il est proposé un programme d'ordinateur, comprenant des instructions de code de programme pour la mise en œuvre d'un procédé tel que décrit précédemment, dans l'un quelconque de ses différents modes de réalisation, lorsque ledit programme est exécuté sur un ordinateur. Le programme d'ordinateur susmentionné peut être stocké dans un médium de stockage lisible par ordinateur et non transitoire.

Dans un autre mode de réalisation de l'invention, il est proposé un dispositif de validation d'une livraison d'un contenu à un terminal client selon la revendication 13.

Ainsi, il est également proposé un dispositif de validation apte à mettre en œuvre le procédé de validation selon la technique décrite (selon l'un quelconque des différents modes de réalisation précités). Ainsi, les caractéristiques et avantages de ce dispositif sont les mêmes que ceux du procédé de validation décrit précédemment. Par conséquent, ils ne sont pas détaillés plus amplement.

Un tel dispositif de validation peut être implémenté dans un terminal.

Dans un autre mode de réalisation de l'invention, il est proposé un dispositif de vérification d'une délégation de livraison d'un contenu selon la revendication 14.

Un tel dispositif de vérification peut être implémenté dans un serveur.

Ainsi, il est également proposé un dispositif de vérification apte à mettre en œuvre le procédé de vérification selon la technique décrite (selon l'un quelconque des différents modes de réalisation précités). Ainsi, les caractéristiques et avantages de ce dispositif sont les mêmes que ceux du procédé de vérification décrit précédemment. Par conséquent, ils ne sont pas détaillés plus amplement.

### 4 LISTE DES FIGURES

D'autres caractéristiques et avantages apparaîtront plus clairement à la lecture de la description suivante de modes de réalisation particuliers de la divulgation, donnés à titre de simples exemples illustratifs et non limitatifs, et des dessins annexés, parmi lesquels :
- la figure 1 illustre une configuration réseau situant les entités impliquées dans la technique décrite ;
- les figures 2a et 2b illustrent les étapes d'un procédé de validation d'une livraison d'un contenu ainsi que les étapes d'un procédé de vérification d'une délégation de livraison d'un contenu selon différents modes de réalisation de l'invention ;
- la figure 3 présente un exemple de structure d'un dispositif de validation d'une livraison d'un contenu permettant la mise en œuvre du procédé de validation d'une livraison d'un contenu des figures 2a et 2b ; et
- la figure 4 présente un exemple de structure d'un dispositif de vérification d'une délégation de livraison d'un contenu permettant la mise en œuvre du procédé de vérification d'une délégation de livraison d'un contenu des figures 2a et 2b.

### 5 DESCRIPTION DETAILLEE

Sur toutes les figures du présent document, les éléments et étapes identiques sont désignés par une même référence.

Le principe général de la technique décrite consiste à proposer une méthode pour valider une livraison d'un contenu référencé sur un serveur d'un fournisseur de contenu à un terminal client dans un contexte de délégation de livraison.

Plus particulièrement, le principe général décrit ci-après s'applique aussi bien dans un contexte de simple délégation (dans ce cas, l'adresse à vérifier est celle d'un serveur de livraison connu du serveur du fournisseur de contenu à l'aide d'un nom de domaine), que dans un contexte de délégations multiples (dans ce cas, le serveur de livraison connu du serveur du fournisseur de contenu délègue la livraison à au moins un serveur secondaire de livraison).

On décrit ci-après plus particulièrement le principe de l'invention dans le cas de la double délégation dans lequel:
- une première délégation correspond à la délégation entre le serveur du fournisseur de contenu et un serveur primaire de livraison connu du serveur du fournisseur de contenu à l'aide d'un nom de domaine, et
- une deuxième délégation correspond à la délégation entre le serveur primaire de livraison et un serveur secondaire de livraison connu du serveur primaire de livraison à l'aide d'une adresse authentique, dit serveur secondaire de livraison authentique.

Dans ce contexte, la technique décrite prévoit la validation de l'adresse que reçoit effectivement le terminal client afin de télécharger le contenu recherché auprès d'un serveur secondaire de livraison identifié par l'adresse reçue par le terminal client. Un tel serveur secondaire de livraison est potentiellement un serveur frauduleux différent du serveur secondaire de livraison authentique auquel le serveur primaire de livraison a effectivement délégué la livraison de contenu. La validation de l'adresse par le terminal client est basée sur une information reçue par le terminal client à partir du serveur du fournisseur de contenu.

Ainsi, le terminal client sait si le serveur secondaire de livraison dont il a reçu l'adresse a effectivement reçu une délégation de livraison de contenu depuis le serveur primaire de livraison et donc si l'adresse reçue est bien celle du serveur secondaire de livraison authentique, ou celle d'un serveur frauduleux.

Un tel principe général s'applique aussi bien dans le cas où le serveur primaire de livraison n'a pas délégué la livraison du contenu à un serveur secondaire de livraison (c'est-à-dire lorsque l'adresse reçue par le terminal client est celle du serveur primaire de livraison) que dans le cas de délégations multiples.

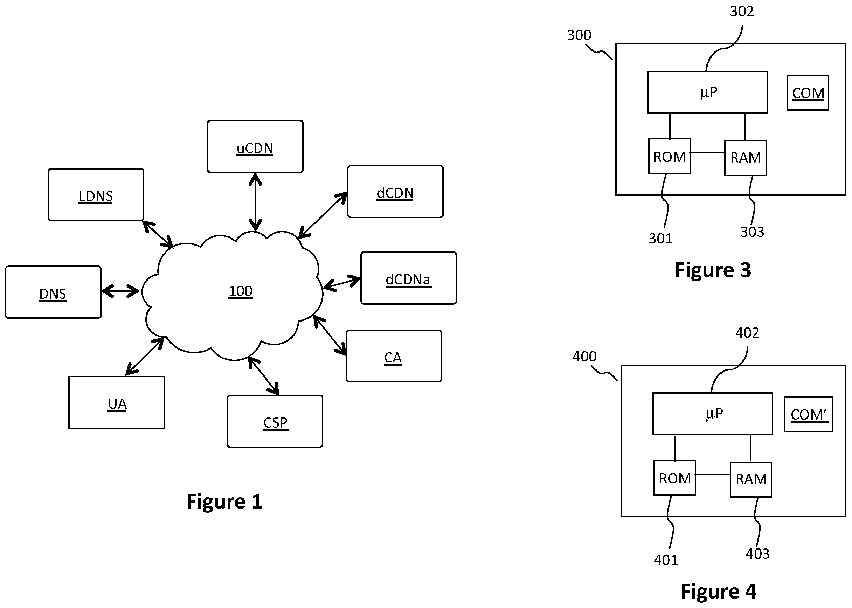

On décrit maintenant, en relation avec la **figure 1****,** une configuration réseau situant les entités impliquées dans la technique décrite. Plus particulièrement, les entités suivantes sont illustrées :
- un serveur CSP d'un fournisseur de contenu référençant différents contenus (par exemple du contenu multimédia, du type comprenant des sons, des images ou des vidéos, ou des fichiers exécutables) destinés à être distribués à des terminaux clients d'utilisateurs finaux ;
- un terminal client UA, par exemple un ordinateur, un smartphone d'un utilisateur, cherchant à obtenir un contenu auprès du fournisseur de contenu, un tel terminal client UA pouvant embarquer un ou plusieurs agents clients (« User Agent » en anglais) du type http (pour « HyperText Transfer Protocol » en anglais) ou HTTPS (pour « HyperText Transfer Protocol Secure » en anglais) ou encore du type navigateur Internet ;
- un serveur primaire de livraison de contenu uCDN auquel le serveur CSP du fournisseur de contenu a délégué la livraison du contenu en question et qui est connu du serveur CSP du fournisseur de contenu à l'aide d'un nom de domaine ;
- un serveur secondaire de livraison authentique dCDNa auquel le serveur primaire de livraison de contenu uCDN a effectivement délégué la livraison du contenu recherché par l'utilisateur du terminal client UA dans un contexte de double délégation. Le serveur secondaire de livraison authentique dCDNa est par ailleurs connu du serveur primaire de livraison de contenu uCDN par une adresse réseau dite authentique (e.g. une adresse IP selon le protocole internet) ;
- un serveur secondaire de livraison dCDN, identifié par une adresse réseau qui est potentiellement différente de l'adresse authentique. Dans ce dernier cas, le serveur secondaire de livraison dCDN est un serveur de livraison pouvant être considéré comme frauduleux, i.e. qui peut délivrer un contenu différent du contenu effectivement recherché par l'utilisateur du terminal client UA ;
- un serveur de résolution de nom de domaine local LDNS permettant d'associer le nom de domaine en question à l'adresse réseau du serveur secondaire de livraison dCDN ;
- un serveur de résolution de nom de domaine autoritaire DNS auprès duquel le serveur de résolution de nom de domaine local LDNS vient mettre à jour ses données en cache de manière à maintenir la correspondance entre des noms de domaine et des serveurs de livraison correspondants ;
- un serveur CA d'une autorité de certification permettant de délivrer des certificats, par exemple selon le protocole HTTPS (pour « HyperText Transfer Protocol Secure » en anglais), aux serveurs secondaires de livraison dCDN, dCDNa en question.

Les différentes entités présentées ci-dessus sont alors connectées entre elles via un réseau 100 de télécommunications pour la transmission de données, par exemple basé sur un protocole internet.

Dans certains modes de réalisation, les serveurs de résolution de nom de domaine local LDNS et autoritaires DNS sont regroupés au sein d'une même entité physique et correspondent alors à un seul et même serveur de résolution de nom de domaine.

Dans d'autres modes de réalisation, les serveurs de livraison primaire uCDN et de livraison secondaire authentique dCDNa sont également regroupés dans une seule et même entité matérielle dans un contexte de simple délégation.

Dans encore d'autres modes de réalisation, différent serveurs de livraison (secondaire, tertiaire, etc.) sont présents, par exemple dans un contexte de délégations multiples.

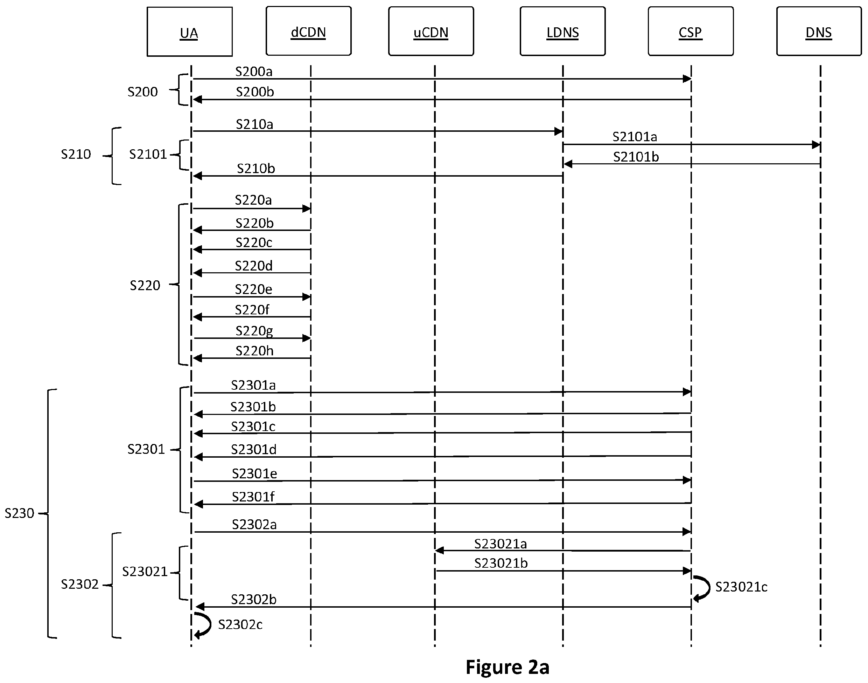

On décrit maintenant, en relation avec la **figure 2a****,** différents modes de réalisation d'un procédé de validation d'une livraison d'un contenu, mis en œuvre par le terminal client UA, ainsi que d'un procédé de vérification d'une délégation de livraison d'un contenu, mis en œuvre par le serveur CSP du fournisseur de contenu.

Lors d'une étape S200, le terminal client UA reçoit un nom de domaine qui identifie le serveur primaire de livraison de contenu uCDN auquel le serveur CSP du fournisseur de contenu a délégué la livraison du contenu recherché par le terminal client UA.

Pour ce faire, le terminal client UA envoie une requête (S200a) au serveur CSP du fournisseur de contenu, par exemple sous la forme d'une requête « GET http://www.csp.com/pathX/contentX » au format HTTP.

Le terminal client UA reçoit en réponse un message (S200b) du serveur CSP du fournisseur de contenu correspondant à une redirection vers le serveur primaire de livraison de contenu uCDN auquel le serveur CSP du fournisseur de contenu a délégué la livraison du contenu recherché par le terminal client UA. Pour ce faire, le message de réponse contient le nom de domaine qui identifie le serveur primaire de livraison de contenu uCDN. Ce message de réponse peut par exemple prendre la forme d'une réponse « 3xx redirect https://www.ucdn.com/pathY/contentY » au format HTTPS (par exemple un message du type « 308 redirect »), le chemin d'accès « Y » étant connu du serveur CSP du fournisseur de contenu par exemple via une carte de correspondance entre X et Y.

Selon certains modes de réalisation, le message (S200b) de réponse reçu par le terminal client UA peut également comprendre au moins une donnée supplémentaire permettant au terminal client de mettre en œuvre certaines étapes de la technique décrite détaillées ci-dessous en relation avec l'étape S230.

Lors d'une étape S210, le terminal client UA reçoit une adresse, dite adresse reçue, du serveur secondaire de livraison dCDN qui va effectivement effectuer la livraison du contenu au terminal client UA.

Pour ce faire, le terminal client UA envoie une requête (S210a) comprenant le nom de domaine reçu lors de l'étape S200 au serveur local de résolution de nom de domaine LDNS. Une telle requête est par exemple de la forme « DNS QUERY ucdn.com ».

En retour, le terminal client UA reçoit un message (S210b) de réponse du serveur local de résolution de nom de domaine LDNS contenant l'adresse du serveur secondaire de livraison dCDN.

Dans un mode de réalisation, le serveur local de résolution de nom de domaine LDNS obtient lui-même l'adresse du serveur secondaire de livraison dCDN auprès du serveur de résolution de nom de domaine autoritaire DNS lors d'une sous-étape S2101, par exemple via l'envoi d'une requête (S2101a) pouvant prendre la forme « DNS QUERY ucdn.com » au serveur de résolution de nom de domaine autoritaire DNS, et la réception en retour d'un message (S2101b) contenant l'adresse du serveur secondaire de livraison dCDN.

Cependant, la connexion avec un tel serveur de résolution de nom de domaine autoritaire DNS peut n'être que faiblement sécurisé en pratique. De la sorte, il arrive que la mémoire cache du serveur de résolution de nom de domaine autoritaire DNS soit modifiée frauduleusement, ou bien tout simplement que cette mémoire n'ait pas été mise à jour malgré une modification du serveur de livraison auquel la livraison du contenu a été déléguée. Par exemple, un tel intervenant extérieur mal intentionné a pu substituer une adresse IP frauduleuse (par exemple « 24.45.73.92 ») à l'adresse authentique normalement associée au nom de domaine « ucdn.com », i.e. l'adresse d'un serveur secondaire de livraison frauduleux dCDN a été substitué à l'adresse du serveur secondaire de livraison authentique dCDNa auquel le serveur primaire de livraison uCDN a délégué la livraison. Dans ce cas, le serveur de résolution de nom de domaine local LDNS, qui met à jour ses tables de correspondance auprès du serveur de résolution de nom de domaine autoritaire DNS, associe également l'adresse frauduleuse au nom de domaine « ucdn.com » en lieu et place de l'adresse authentique normalement associée à ce nom de domaine « ucdn.com ».

Dans ce contexte, le terminal client UA reçoit du serveur local de résolution de nom de domaine LDNS un message (S210b) qui contient l'adresse frauduleuse, par exemple un message de réponse du type « DNS IN A 24.45.73.92 ». Le terminal client UA reçoit donc l'adresse du serveur secondaire de livraison dCDN potentiellement frauduleux, en lieu et place de l'adresse authentique du serveur secondaire de livraison authentique dCDNa auquel le serveur primaire de livraison uCDN a délégué la livraison de contenu.

Dans le mode de réalisation décrit ci-dessus en relation avec la figure 1 dans lequel les serveurs de résolution de nom de domaine local LDNS et autoritaires DNS sont regroupés au sein d'une même entité physique et correspondent alors à un seul et même serveur de résolution de nom de domaine, la même problématique de modification par un intervenant extérieur malveillant, du cache du serveur autoritaire DNS associant noms de domaines et adresses de serveurs se pose également lorsque cet intervenant extérieur mal intentionné substitue l'adresse d'un serveur secondaire de livraison frauduleux à l'adresse du serveur secondaire de livraison authentique dCDNa.

Lors d'une étape S220, le terminal client UA initie le téléchargement du contenu à partir du serveur secondaire de livraison dCDN dont il a reçu l'adresse à l'étape S210 (i.e. un contenu potentiellement frauduleux lorsque l'adresse reçue correspond à l'adresse d'un serveur secondaire de livraison dCDN frauduleux).

Un tel téléchargement est par exemple initié via l'échange de messages TLS (pour « Transport Layer Security » en anglais) suivants, permettant d'établir une liaison sécurisée pour la transmission du contenu selon le protocole HTTPS :
- l'envoi d'une requête (S220a) au serveur secondaire de livraison dCDN, par exemple sous la forme « ClientHello (SNI= www.ucdn.com) » ;
- la réception d'un message (S220b) du serveur secondaire de livraison dCDN du type « ServerHello » ;
- la réception d'un message (S220c) de type « Certificate » provenant du serveur secondaire de livraison dCDN. Le champ du certificat « common name » inclus les champs « csp.com » ou « ucdn.com » signés par l'autorité de certification CA ;
- la réception d'un message (S220d) du serveur secondaire de livraison dCDN du type « ServerKeyExchange » ;
- l'envoi d'un message (S220e) au serveur secondaire de livraison dCDN du type « ClientKeyExchange » finalisant l'échange de clés de cryptage servant à chiffrer la session TLS établie entre le terminal client UA et le serveur secondaire de livraison;
- la réception d'un message (S220f) du serveur secondaire de livraison dCDN du type « Finished » indiquant que la liaison sécurisée est établie ;
- l'envoi d'une requête (S220g) au serveur secondaire de livraison dCDN, du type « GET https://www.ucdn.com/pathY/contentY » selon le protocole HTTP afin d'initier le téléchargement du contenu ;
- la réception d'un message (S220h) du serveur secondaire de livraison dCDN du type « 200 OK » selon le protocole HTTP, suivi du contenu délivré par le serveur secondaire de livraison dCDN au terminal client UA.

Dans le cas où l'adresse reçue par le terminal client UA à l'étape S210 est différente de l'adresse authentique, le contenu reçu par le terminal client UA à l'étape S220 est potentiellement différent du contenu attendu par le terminal client UA.

Afin de sécuriser le téléchargement du contenu, le terminal client UA détermine, lors d'une étape S230, la validité de l'adresse reçue à l'étape S210 par rapport à l'adresse authentique. Plus particulièrement, la détermination de la validité est basée sur une information relative à l'adresse authentique reçue depuis le serveur CSP du fournisseur de contenu.

Pour ce faire, dans un mode de réalisation, une connexion sécurisée est tout d'abord initiée lors d'une sous-étape S2301 entre le terminal client UA et le serveur CSP du fournisseur de contenu, par exemple via l'échange des messages TLS suivants, permettant d'établir une liaison sécurisée pour recevoir l'information relative à l'adresse authentique depuis le serveur CSP du fournisseur de contenu:
- l'envoi d'une requête (S2301a) au serveur CSP du fournisseur de contenu du type « ClientHello (SNI= www.csp.com) » ;
- la réception d'un message (S2301b) du serveur CSP du fournisseur de contenu du type « ServerHello » ;
- la réception d'un message (S2301c) du serveur CSP du fournisseur de contenu du type « Server Certificate » ;
- la réception d'un message (S2301d) du serveur CSP du fournisseur de contenu du type « ServerKeyExchange » ;
- l'envoi d'un message (S2301e) au serveur CSP du fournisseur de contenu du type « ClientKeyExchange » finalisant l'échange de clés de cryptage ;
- la réception d'un message (S2301f) du serveur CSP du fournisseur de contenu du type « Finished » indiquant que la liaison sécurisée est établie.

Une fois la connexion sécurisée établie, lors d'une étape S2302, le terminal client UA reçoit, l'information relative à l'adresse authentique envoyée par le serveur CSP du fournisseur de contenu.

Pour ce faire, lors d'une sous-étape S23021, le serveur CSP du fournisseur de contenu obtient l'information relative à l'adresse authentique permettant la détermination de la validité de l'adresse reçue par rapport à l'adresse authentique par le terminal client UA.

Dans un **premier mode de réalisation de la sous-étape S2302,** le terminal client UA envoie une requête (S2302a) au serveur CSP du fournisseur de contenu afin de recevoir en retour un message (S2302b) comprenant l'information relative à l'adresse authentique en provenance du serveur CSP du fournisseur de contenu.

Le serveur CSP du fournisseur de contenu envoie alors une requête (S23021a) au serveur primaire de livraison uCDN afin de recevoir une réponse (S23021b) comprenant l'adresse authentique du serveur de livraison secondaire authentique dCDNa auquel le serveur primaire de livraison uCDN a délégué la livraison de contenu.

Lors d'une étape S23021c, le serveur CSP du fournisseur de contenu détermine une information relative à l'adresse authentique. Dans ce premier mode de réalisation, l'information relative à l'adresse authentique correspond à l'adresse authentique elle-même.

Le terminal client UA reçoit un message (S2302b) comprenant l'information relative à l'adresse authentique. Lors d'une étape S2302c, le terminal client UA compare ainsi l'adresse reçue et l'adresse authentique afin de déterminer la validité de l'adresse reçue, i.e. si le serveur secondaire de livraison dCDN correspond bien au serveur de livraison secondaire authentique dCDNa auquel le serveur primaire de livraison uCDN a délégué la livraison de contenu.

Dans un **deuxième mode de réalisation de la sous-étape S2302,** la requête (S2302a) envoyée par le terminal client UA au serveur CSP du fournisseur de contenu comprend l'adresse reçue identifiant le serveur secondaire de livraison dCDN. Il peut s'agir par exemple d'une requête HTTP du type XHR (pour « XML HTTP request » en anglais) vers « https://www.csp.com », avec pour paramètres « @IP dCDN 24.45.73.92, [record DNS, @DNS] ».

Le serveur CSP du fournisseur de contenu obtient alors l'adresse authentique soit sous la forme d'une adresse prédéterminée qu'il a stockée, soit directement auprès du serveur primaire de livraison uCDN.

Dans ce dernier cas, le serveur CSP du fournisseur de contenu envoie une requête (S23021a) au serveur primaire de livraison uCDN afin de recevoir une réponse (S23021b) comprenant l'adresse authentique du serveur de livraison secondaire authentique dCDNa auquel le serveur primaire de livraison uCDN a délégué la livraison de contenu.

Lors d'une étape S23021c, le serveur CSP du fournisseur de contenu détermine l'information relative à l'adresse authentique en comparant l'adresse reçue et l'adresse authentique.

Le terminal client UA reçoit un message (S2302b) comprenant l'information relative à l'adresse authentique déterminée par le serveur CSP du fournisseur de contenu lors de l'étape S23021c. Dans ce deuxième mode de réalisation, une telle information correspond à au moins un champ de données positionné à une valeur indiquant si l'adresse reçue est égale à l'adresse authentique.

Ainsi, la vérification de la concordance entre l'adresse reçue et de l'adresse authentique est faite par le serveur CSP du fournisseur de contenu, simplifiant par là-même les traitements effectués par le terminal client.

Dans un **troisième mode de réalisation de la sous-étape S2302,** la requête (S2302a) envoyée par le terminal client UA au serveur CSP du fournisseur de contenu comprend l'adresse reçue identifiant le serveur secondaire de livraison dCDN. Il peut s'agir par exemple d'une requête du type « GET xhr request https://www.csp.com/, @IP dCDN 24.45.73.92, [record DNS, @DNS] ».

Le serveur CSP du fournisseur de contenu envoie alors une requête (S23021a) au serveur primaire de livraison uCDN comprenant l'adresse reçue identifiant le serveur secondaire de livraison dCDN afin de recevoir en retour une réponse (S23021b) comprenant un résultat d'une comparaison avec l'adresse authentique du serveur de livraison secondaire authentique dCDNa auquel le serveur primaire de livraison uCDN a délégué la livraison de contenu. Dans ce troisième mode de réalisation, une telle comparaison est effectuée par le serveur primaire de livraison uCDN.

Lors de l'étape S23021c, le serveur CSP du fournisseur de contenu détermine l'information relative à l'adresse authentique sur la base du résultat de la comparaison effectuée par le serveur primaire de livraison uCDN.

Le terminal client UA reçoit un message (S2302b) comprenant l'information relative à l'adresse authentique correspondant dans ce troisième mode de réalisation à au moins un champ de données positionné à une valeur indiquant si l'adresse reçue est égale à l'adresse authentique.

Ainsi, selon différentes variantes, l'adresse authentique appartient au groupe comprenant au moins :
- une adresse prédéterminée stockée sur le serveur primaire de livraison uCDN ;
- une adresse prédéterminée stockée sur le serveur CSP du fournisseur de contenu ;
- une adresse obtenue par le serveur CSP du fournisseur de contenu auprès du serveur de livraison primaire uCDN pour le contenu recherché par le terminal client ;
- une adresse préalablement obtenue par le serveur CSP du fournisseur de contenu auprès du serveur de livraison primaire uCDN pour le contenu recherché par le terminal client et mise à jour périodiquement auprès du serveur de livraison primaire uCDN.

Ainsi, l'adresse authentique peut être prédéterminée, permettant ainsi une sécurisation optimale et une minimisation des échanges entre entités. Alternativement, l'adresse authentique peut être obtenue auprès du serveur primaire de livraison uCDN de manière à permettre la mise en œuvre de la technique décrite lorsque l'adresse authentique est régulièrement mise à jour.

Par ailleurs, selon différents modes de réalisation, l'exécution de l'étape S230 est mise en œuvre sur la base de différents moyens logiciels et/ou différents critères de mise en œuvre conditionnelle.

Par exemple, dans un mode de réalisation, le terminal client UA comprend par défaut les instructions de code permettant d'implémenter l'étape S230 de détermination de la validité de ladite adresse reçue par rapport à ladite adresse authentique selon la technique décrite. Par exemple, de telles instructions de code sont comprises dans les instructions de code permettant d'exécuter sur le terminal client UA un navigateur internet utilisé pour obtenir le contenu. Dans ce cas, les échanges entre entités mises en jeu sont minimisés, le serveur CSP du fournisseur de contenu n'ayant pas à transmettre des instructions de code supplémentaires au terminal client UA.

Dans un autre mode de réalisation, le message (S200b) de réponse reçu par le terminal client UA lors de l'étape S200 décrite ci-dessus comprend en outre au moins une donnée supplémentaire comprenant au moins des instructions de code permettant au terminal client de mettre en œuvre l'étape S230. Ainsi, les terminaux clients équipés d'un navigateur internet de l'état de l'art peuvent mettre en œuvre la technique décrite, les moyens supplémentaires nécessaires à cette mise en œuvre étant fournis à de tels navigateurs par le serveur CSP du fournisseur de contenu.

Dans une variante, la au moins une donnée comprise dans le message (S200b) de réponse reçu par le terminal client UA lors de l'étape S200 comprend au moins un champ de données positionné à une valeur indiquant au terminal client UA d'effectuer l'étape S230 de détermination de la validité de l'adresse reçue par rapport à l'adresse authentique. Ainsi, le fournisseur de contenu garde le contrôle sur la mise en œuvre de la validation de la délégation de livraison par le terminal client.

Dans un autre mode de réalisation, le téléchargement du contenu livré par le serveur de livraison secondaire dCDN identifié par l'adresse reçue est effectué via une connexion sécurisée basée sur un certificat du nom de domaine comme décrit ci-dessus en relation avec l'étape S220. Dans ce cas, l'étape S230 de détermination de la validité de l'adresse reçue par rapport à l'adresse authentique est mise en œuvre lorsque le certificat n'est pas délivré par l'autorité de certification, mais lorsque le certificat est auto-signé par le serveur de livraison secondaire dCDN identifié par l'adresse reçue. Ainsi, la vérification par le terminal client est effectuée lorsqu'il y a suspicion sur la nature du serveur de livraison secondaire dCDN.

Dans la variante illustrée sur la figure 2a, le téléchargement du contenu a été initié à l'étape S220 avant la mise en œuvre de l'étape S230 de détermination de la validité de l'adresse reçue par rapport à l'adresse authentique. Lors de l'étape S230, si le terminal client détermine que l'adresse reçue n'est pas valide (i.e. que l'adresse reçue est différente de l'adresse authentique), le téléchargement du contenu est interrompu par le terminal client UA.

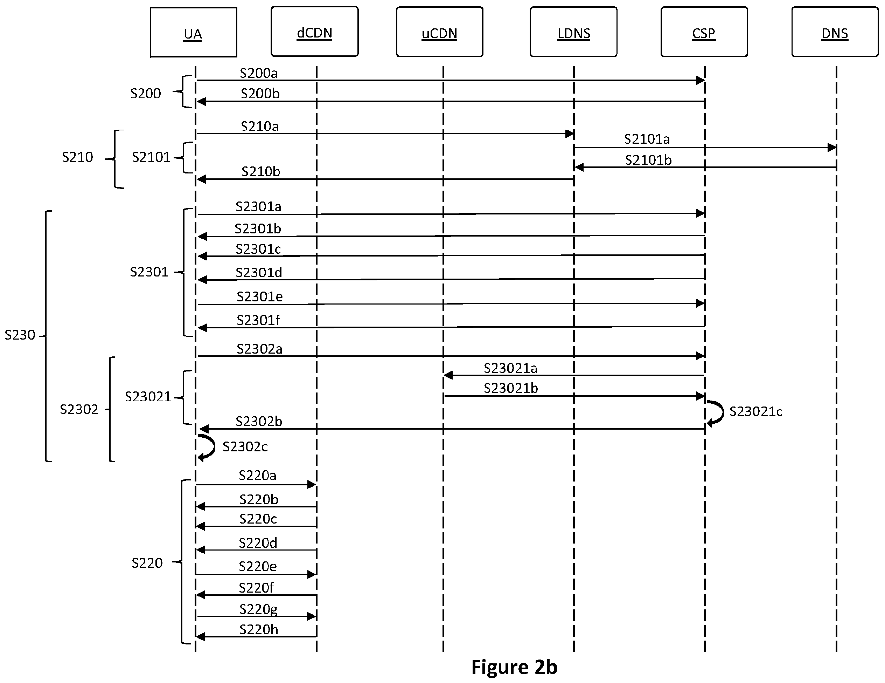

La figure 2b illustre une variante dans laquelle l'étape S230 de détermination de la validité de l'adresse reçue par rapport à l'adresse authentique est mise en œuvre avant l'étape S220 de téléchargement du contenu. Selon cette variante, si lors de l'étape S230, le terminal client UA détermine que l'adresse reçue est valide (i.e. que l'adresse reçue est égale à l'adresse authentique), le téléchargement du contenu est initié lors de l'étape S220.

Dans d'autres modes de réalisation, l'étape d'obtention S23021 de l'information (information permettant la détermination par le terminal client UA de la validité de l'adresse reçue par rapport à l'adresse authentique lors de l'étape S230) est mise en œuvre par un autre serveur du fournisseur de contenu que le serveur CSP du fournisseur de contenu ayant fourni le message (S200b) de réponse reçu par le terminal client UA lors de l'étape S200 décrite ci-dessus.

Dans ce cas, le message (S200b) de réponse reçu par le terminal client UA lors de l'étape S200 comprend en outre une donnée supplémentaire (par exemple un jeton) indiquant au terminal client UA auprès de quel serveur du fournisseur de contenu envoyer les requêtes lors de la mise en œuvre de l'étape S230.La **figure 3** présente un exemple de structure de dispositif de validation d'une livraison d'un contenu 300, permettant la mise en œuvre d'un procédé de validation d'une délégation de livraison d'un contenu selon l'un quelconque des modes de réalisation décrits ci-dessus en relation avec les figures 2a et 2b.

Le dispositif de validation 300 comprend une mémoire vive 303 (par exemple une mémoire RAM), une unité de traitement 302, équipée par exemple d'un processeur, et pilotée par un programme d'ordinateur stocké dans une mémoire morte 301 (par exemple une mémoire ROM ou un disque dur). A l'initialisation, les instructions de code du programme d'ordinateur sont par exemple chargées dans la mémoire vive 303 avant d'être exécutées par le processeur de l'unité de traitement 302.

La figure 3 illustre seulement un mode particulier de réalisation, parmi plusieurs modes particuliers de réalisation possibles, du procédé de validation d'une livraison d'un contenu détaillé ci-dessus, en relation avec les figures 2a et 2b. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Le dispositif de validation comprend également un module de communication (COM) adapté pour recevoir une adresse, dite adresse reçue, en réponse à une requête envoyée à un serveur de résolution de nom de domaine. Le module de communication est également adapté pour recevoir une information relative à une adresse authentique associée au serveur de livraison du contenu demandé par le terminal client.

Selon un mode particulier de réalisation de l'invention, l'unité de traitement comprend un module logiciel de navigation Internet ("browser" en anglais) ou client HTTP adapté à mettre en œuvre le procédé de validation selon l'un quelconque des modes particuliers décrits précédemment.

Selon un mode de réalisation, un tel dispositif de validation est compris dans un terminal client.

La **figure 4** présente un exemple de structure de dispositif de vérification d'une délégation de livraison d'un contenu 400, permettant la mise en œuvre d'un procédé de vérification d'une délégation de livraison d'un contenu selon l'un quelconque des modes de réalisation décrit ci-dessus en relation avec les figures 2a et 2b.

Le dispositif de vérification 400 comprend une mémoire vive 403 (par exemple une mémoire RAM), une unité de traitement 402, équipée par exemple d'un processeur, et pilotée par un programme d'ordinateur stocké dans une mémoire morte 401 (par exemple une mémoire ROM ou un disque dur). A l'initialisation, les instructions de code du programme d'ordinateur sont par exemple chargées dans la mémoire vive 403 avant d'être exécutées par le processeur de l'unité de traitement 402.

La figure 4 illustre seulement une manière particulière, parmi plusieurs possibles, de mise en œuvre le procédé de vérification d'une délégation de livraison d'un contenu détaillé ci-dessus, en relation avec les figures 2a et 2b. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Le dispositif de vérification comprend également un module de communication (COM') adapté pour envoyer une information au terminal client, l'information permettant au terminal client la détermination de la validité d'une adresse, dite adresse reçue (et reçue par le terminal client en réponse à une requête envoyée à un serveur de résolution de nom de domaine) par rapport à une adresse authentique associée à un serveur de livraison.

Dans un mode de réalisation, un tel dispositif de vérification est compris dans un serveur, par exemple un serveur d'un fournisseur de contenu.

## Revendications

1. Procédé de **validation** d'une livraison d'un contenu à un terminal client (UA), comprenant une étape de :
• réception (S210b), par le terminal client (UA), d'une première adresse, dite adresse reçue, en réponse à une requête envoyée (S210a) à un serveur d'adresses (LDNS, DNS) pour obtenir l'adresse d'un serveur de livraison (uCDN) dudit contenu, la requête comprenant une information relative audit serveur de livraison ;
**caractérisé en ce qu'**il comprend en outre au moins les étapes suivantes mises en œuvre par le terminal client (UA) :
• l'envoi (S2302a) d'une requête à un serveur (CSP) du fournisseur de contenu comprenant ladite adresse reçue identifiant ledit serveur de livraison (uCDN) afin de recevoir une information relative à une seconde adresse, dite adresse authentique, associée audit serveur de livraison ;
• réception (S2302b) de ladite information envoyée par ledit serveur (CSP), ladite information correspondant à au moins un champ de données positionné à une valeur indiquant si ladite adresse reçue est égale à ladite adresse authentique ; et
• détermination (S230) de la validité de ladite adresse reçue par rapport à ladite adresse authentique à partir de ladite information relative à l'adresse authentique.

2. Procédé selon la revendication 1 dans lequel ladite information comprend ladite adresse authentique,
et dans lequel ladite détermination (S230) de la validité de ladite adresse reçue par rapport à ladite adresse authentique comprend en outre :
• la comparaison (S2302c) de ladite adresse reçue et de ladite adresse authentique.

3. Procédé selon l'une quelconque des revendications 1 à 2 comprenant en outre la réception (S200b) d'un message comprenant au moins une donnée permettant de mettre en œuvre ladite détermination (S230) de la validité de ladite adresse reçue par rapport à ladite adresse authentique, en réponse à une requête du terminal client vers un autre serveur du fournisseur de contenu pour obtenir le contenu.

4. Procédé selon la revendication 3 dans lequel ladite au moins une donnée comprend au moins des instructions de code permettant d'implémenter ladite détermination (S230) de la validité de ladite adresse reçue par rapport à ladite adresse authentique.

5. Procédé selon la revendication 3 ou 4 dans lequel ladite au moins une donnée comprend au moins un autre champ de données positionné à une valeur indiquant audit terminal client (UA) d'effectuer ladite détermination (S230) de la validité de ladite adresse reçue par rapport à ladite adresse authentique.

6. Procédé selon l'une quelconque des revendications 1 à 5 comprenant en outre :
• le téléchargement (S220) dudit contenu livré par un serveur de livraison (dCDN) identifié par l'adresse reçue, ladite livraison étant effectuée via une connexion sécurisée TLS (pour « Transport Layer Security » en anglais) basée sur un certificat dudit nom de domaine ;
ladite détermination (S230) de la validité de ladite adresse reçue par rapport à ladite adresse authentique étant mise en œuvre lorsque ledit certificat est auto signé par ledit serveur de livraison (dCDN) identifié par l'adresse reçue.

7. Procédé de **vérification** d'une délégation de livraison d'un contenu à un terminal client (UA),
**caractérisé en ce qu'**il comprend les étapes suivantes mises en œuvre par un serveur (CSP) du fournisseur de contenu :
• réception (S2302a) d'au moins une requête envoyée par ledit terminal client (UA), ladite une requête comprenant une première adresse, dite adresse reçue, d'un serveur de livraison ;
• obtention (S23021) d'une information permettant la détermination (S230) par le terminal client (UA) de la validité ladite adresse reçue par rapport à une deuxième adresse, dite adresse authentique associée à audit serveur de livraison, ladite information correspondant à au moins un champ de données positionné à une valeur indiquant si ladite adresse reçue est égale à ladite adresse authentique, et
• envoi (S2302b) de ladite information audit terminal client (UA).

8. Procédé selon la revendication 7 dans lequel ladite information envoyée au terminal client (UA) correspond à ladite adresse authentique.

9. Procédé selon la revendication 7 comprenant en outre :
• la comparaison (S23021c) de ladite adresse reçue et de ladite adresse authentique pour délivrer ladite information envoyée au terminal client (UA).

10. Procédé selon l'une quelconque des revendications 1 à 9 dans lequel ladite livraison est déléguée par ledit serveur de livraison (uCDN) à au moins un serveur secondaire de livraison (dCDNa), l'adresse authentique identifiant ledit serveur secondaire de livraison (dCDNa) étant mémorisée dans ledit serveur de livraison (uCDN).

11. Procédé selon la revendication 10 dans lequel ladite adresse authentique appartient au groupe comprenant :
• une adresse prédéterminée stockée sur ledit serveur de livraison (uCDN) ;
• une adresse prédéterminée stockée sur ledit serveur (CSP) du fournisseur de contenu ;
• une adresse obtenue par ledit serveur (CSP) du fournisseur de contenu auprès dudit serveur de livraison (uCDN) pour ledit contenu ; et
• une adresse préalablement obtenue par ledit serveur (CSP) du fournisseur de contenu auprès dudit serveur de livraison (uCDN) pour ledit contenu et mise à jour périodiquement auprès dudit serveur de livraison (uCDN).

12. Produit programme d'ordinateur, comprenant des instructions de code de programme pour la mise en œuvre d'un procédé selon l'une quelconque des revendications 1 à 11, lorsque ledit programme est exécuté sur un ordinateur.

13. Dispositif (300) de **validation** d'une livraison d'un contenu à un terminal client (UA),
comprenant une machine de calcul reprogrammable (302) ou une machine de calcul dédiée, apte à et configurée pour :
• recevoir une première adresse, dite adresse reçue, en réponse à une requête envoyée à un serveur d'adresses (LDNS, DNS) pour obtenir l'adresse d'un serveur de livraison (uCDN) dudit contenu, la requête comprenant une information relative audit serveur de livraison ;
**caractérisé en ce que** ladite machine de calcul reprogrammable (302) ou ladite machine de calcul dédiée, est en outre apte à et configurée pour :
• envoyer (S2302a) une requête à un serveur (CSP) du fournisseur de contenu comprenant ladite adresse reçue identifiant ledit serveur de livraison (uCDN) afin de recevoir une information relative à une seconde adresse, dite adresse authentique, associée audit serveur de livraison ;
• recevoir (S2302b) de ladite information envoyée par ledit serveur (CSP), ladite information correspondant à au moins un champ de données positionné à une valeur indiquant si ladite adresse reçue est égale à ladite adresse authentique ; et
• déterminer (S230) la validité de ladite adresse reçue par rapport à ladite adresse authentique à partir de ladite information relative à l'adresse authentique.

14. Dispositif (400) de **vérification** d'une délégation de livraison d'un contenu à un terminal client (UA),
**caractérisé en ce qu'**il comprend une machine de calcul reprogrammable (402) ou une machine de calcul dédiée, apte à et configurée pour :
• recevoir S2302a) au moins une requête envoyée par ledit terminal client (UA), ladite une requête comprenant une première adresse, dite adresse reçue, d'un serveur de livraison ;
• obtenir (S23021) une information permettant la détermination (S230) par le terminal client (UA) de la validité ladite adresse reçue par rapport à une deuxième adresse, dite adresse authentique associée à audit serveur de livraison, ladite information correspondant à au moins un champ de données positionné à une valeur indiquant si ladite adresse reçue est égale à ladite adresse authentique ; et
• envoyer (S2302b) ladite information audit terminal client (UA).

## Patentansprüche

1. Verfahren zur Validierung einer Bereitstellung von Inhalt an ein Client-Endgerät (UA),
beinhaltend einen folgenden Schritt:
• Empfangen (S210b), durch das Client-Endgerät (UA), einer ersten Adresse, als empfangene Adresse bezeichnet, als Reaktion auf eine an einen Adress-Server (LDNS, DNS) gesendete (S210a) Anfrage zum Erhalten der Adresse eines Bereitstellungsservers (uCDN) für den Inhalt, wobei die Anfrage eine Information über den Bereitstellungsserver beinhaltet;
**dadurch gekennzeichnet, dass** es ferner mindestens die folgenden Schritte beinhaltet, die durch das Client-Endgerät (UA) umgesetzt werden:
• Senden (S2302a) einer Anfrage an einen Server (CSP) des Inhaltanbieters, die die empfangene Adresse beinhaltet, die den Bereitstellungsserver (uCDN) identifiziert, um eine Information über eine zweite Adresse, als authentische Adresse bezeichnet, zu empfangen, die mit dem Bereitstellungsserver assoziiert ist;
• Empfangen (S2302b) der durch den Server (CSP) gesendeten Information, wobei die Information mindestens einem Datenfeld entspricht, das auf einen Wert gesetzt ist, der angibt, ob die empfangene Adresse gleich der authentischen Adresse ist; und
• Bestimmen (S230) der Validität der empfangenen Adresse in Bezug auf die authentische Adresse anhand der Information über die authentische Adresse.

2. Verfahren nach Anspruch 1, wobei die Information die authentische Adresse beinhaltet,
und wobei das Bestimmen (S230) der Validität der empfangenen Adresse in Bezug auf die authentische Adresse ferner Folgendes beinhaltet:
• Vergleichen (S2302c) der empfangenen Adresse und der authentischen Adresse.

3. Verfahren nach einem der Ansprüche 1 bis 2, ferner beinhaltend das Empfangen (S200b) einer Nachricht, die mindestens ein Datenelement beinhaltet, das es gestattet, das Bestimmen (S230) der Validität der empfangenen Adresse in Bezug auf die authentische Adresse umzusetzen, als Reaktion auf eine Anfrage des Client-Endgeräts an einen weiteren Server des Inhaltanbieters zum Erhalten des Inhalts.

4. Verfahren nach Anspruch 3, wobei das mindestens eine Datenelement mindestens Codeanweisungen beinhaltet, die es gestatten, das Bestimmen (S230) der Validität der empfangenen Adresse in Bezug auf die authentische Adresse zu implementieren.

5. Verfahren nach Anspruch 3 oder 4, wobei das mindestens eine Datenelement mindestens ein weiteres Datenfeld beinhaltet, das auf einen Wert gesetzt ist, der gegenüber dem Client-Endgerät (UA) angibt, das Bestimmen (S230) der Validität der empfangenen Adresse in Bezug auf die authentische Adresse vorzunehmen.

6. Verfahren nach einem der Ansprüche 1 bis 5, ferner beinhaltend:
• Herunterladen (S220) des Inhalts, der durch einen Bereitstellungsserver (dCDN) bereitgestellt wird, der durch die empfangene Adresse identifiziert wird, wobei die Bereitstellung über eine sichere TLS-Verbindung (für "Transport Layer Security" im Englischen) vorgenommen wird, die auf einem Zertifikat des Domainnamens basiert;
wobei das Bestimmen (S230) der Validität der empfangenen Adresse in Bezug auf die authentische Adresse umgesetzt wird, wenn das Zertifikat durch den Bereitstellungsserver (dCDN), der durch die empfangene Adresse identifiziert wird, eigensigniert ist.

7. Verfahren zur Überprüfung einer Delegation einer Bereitstellung von Inhalt an ein Client-Endgerät (UA), **dadurch gekennzeichnet, dass** es die folgenden Schritte beinhaltet, die durch einen Server (CSP) des Inhaltanbieters umgesetzt werden:
• Empfangen (S2302a) mindestens einer durch das Client-Endgerät (UA) gesendeten Anfrage, wobei die eine Anfrage eine erste Adresse, als empfangene Adresse bezeichnet, eines Bereitstellungsservers beinhaltet;
• Erhalten (S23021) einer Information, die das Bestimmen (S230), durch das Client-Endgerät (UA), der Validität der empfangenen Adresse in Bezug auf eine zweite Adresse, als authentische Adresse bezeichnet, die mit dem Bereitstellungsserver assoziiert ist, gestattet, wobei die Information mindestens einem Datenfeld entspricht, das auf einen Wert gesetzt ist, der angibt, ob die empfangene Adresse gleich der authentischen Adresse ist, und
• Senden (S2302b) der Information an das Client-Endgerät (UA).

8. Verfahren nach Anspruch 7, wobei die an das Client-Endgerät (UA) gesendete Information der authentischen Adresse entspricht.

9. Verfahren nach Anspruch 7, ferner beinhaltend:
• Vergleichen (S23021c) der empfangenen Adresse und der authentischen Adresse, um die an das Client-Endgerät (UA) gesendete Information zu liefern.

10. Verfahren nach einem der Ansprüche 1 bis 9, wobei die Bereitstellung durch den Bereitstellungsserver (uCDN) an mindestens einen sekundären Bereitstellungsserver (dCDNa) delegiert wird, wobei die authentische Adresse, die den sekundären Bereitstellungsserver (dCDNa) identifiziert, in dem Bereitstellungsserver (uCDN) gespeichert ist.

11. Verfahren nach Anspruch 10, wobei die authentische Adresse zu der Gruppe gehört, die Folgendes beinhaltet:
• eine vorbestimmte Adresse, die in dem Bereitstellungsserver (uCDN) abgespeichert ist;
• eine vorbestimmte Adresse, die in dem Server (CSP) des Inhaltanbieters abgespeichert ist;
• eine Adresse, die durch den Server (CSP) des Inhaltanbieters von dem Bereitstellungsserver (uCDN) für den Inhalt erhalten wird; und
• eine Adresse, die durch den Server (CSP) des Inhaltanbieters im Vorfeld von dem Bereitstellungsserver (uCDN) für den Inhalt erhalten wird und mit Hilfe des Bereitstellungsservers (uCDN) periodisch aktualisiert wird.

12. Computerprogrammprodukt, das Programmcodeanweisungen beinhaltet, die bei der Ausführung des Programms auf einem Computer ein Verfahren nach einem der Ansprüche 1 bis 11 umsetzen.

13. Vorrichtung (300) zur Validierung einer Bereitstellung von Inhalt an ein Client-Endgerät (UA), beinhaltend eine umprogrammierbare Rechenmaschine (302) oder eine dedizierte Rechenmaschine, die zu Folgendem fähig und konfiguriert ist:
• Empfangen einer ersten Adresse, als empfangene Adresse bezeichnet, als Reaktion auf eine an einen Adress-Server (LDNS, DNS) gesendeten Anfrage zum Erhalten der Adresse eines Bereitstellungsservers (uCDN) für den Inhalt, wobei die Anfrage eine Information über den Bereitstellungsserver beinhaltet;
**dadurch gekennzeichnet, dass** die umprogrammierbare Rechenmaschine (302) oder die dedizierte Rechenmaschine ferner zu Folgendem fähig und konfiguriert ist:
• Senden (S2302a) einer Anfrage an einen Server (CSP) des Inhaltanbieters, die die empfangene Adresse beinhaltet, die den Bereitstellungsserver (uCDN) identifiziert, um eine Information über eine zweite Adresse, als authentische Adresse bezeichnet, zu empfangen, die mit dem Bereitstellungsserver assoziiert ist;
• Empfangen (S2302b) der durch den Server (CSP) gesendeten Information, wobei die Information mindestens einem Datenfeld entspricht, das auf einen Wert gesetzt ist, der angibt, ob die empfangene Adresse gleich der authentischen Adresse ist; und
• Bestimmen (S230) der Validität der empfangenen Adresse in Bezug auf die authentische Adresse anhand der Information über die authentische Adresse.

14. Vorrichtung (400) zur Überprüfung einer Delegation einer Bereitstellung von Inhalt an ein Client-Endgerät (UA),
**dadurch gekennzeichnet, dass** sie eine umprogrammierbare Rechenmaschine (402) oder eine dedizierte Rechenmaschine beinhaltet, die zu Folgendem fähig und konfiguriert ist:
• Empfangen (S2302a) mindestens einer durch das Client-Endgerät (UA) gesendeten Anfrage, wobei die eine Anfrage eine erste Adresse, als empfangene Adresse bezeichnet, eines Bereitstellungsservers beinhaltet;
• Erhalten (S23021) einer Information, die das Bestimmen (S230), durch das Client-Endgerät (UA), der Validität der empfangenen Adresse in Bezug auf eine zweite Adresse, als authentische Adresse bezeichnet, die mit dem Bereitstellungsserver assoziiert ist, gestattet, wobei die Information mindestens einem Datenfeld entspricht, das auf einen Wert gesetzt ist, der angibt, ob die empfangene Adresse gleich der authentischen Adresse ist; und
• Senden (S2302b) der Information an das Client-Endgerät (UA).

## Claims

1. Method for validating delivery of an item of content to a client terminal (UA),
comprising a step of:
• reception (S210b), by the client terminal (UA), of a first address, called received address, in response to a request sent (S210a) to an address server (LDNS, DNS) in order to obtain the address of a delivery server (uCDN) for delivering said item of content, the request comprising an item of information in relation to said delivery server;
**characterized in that** it furthermore comprises at least the following steps implemented by the client terminal (UA) :
• sending (S2302a) a request to a server (CSP) of the content provider comprising said received address identifying said delivery server (uCDN) in order to receive an item of information in relation to a second address, called authentic address, associated with said delivery server;
• reception (S2302b) of said item of information sent by said server (CSP), said item of information corresponding to at least one data field positioned at a value indicating whether said received address is equal to said authentic address; and
• determination (S230) of the validity of said received address with respect to said authentic address on the basis of said item of information in relation to the authentic address.

2. Method according to Claim 1, wherein said item of information comprises said authentic address,
and wherein said determination (S230) of the validity of said received address with respect to said authentic address furthermore comprises:
• comparing (S2302c) said received address and said authentic address.

3. Method according to either one of Claims 1 and 2, furthermore comprising receiving (S200b) a message comprising at least one item of data for implementing said determination (S230) of the validity of said received address with respect to said authentic address, in response to a request from the client terminal to another server of the content provider in order to obtain the item of content.

4. Method according to Claim 3, wherein said at least one item of data comprises at least code instructions for implementing said determination (S230) of the validity of said received address with respect to said authentic address.

5. Method according to Claim 3 or 4, wherein said at least one item of data comprises at least one other data field positioned at a value telling said client terminal (UA) to perform said determination (S230) of the validity of said received address with respect to said authentic address.

6. Method according to any one of Claims 1 to 5, furthermore comprising:
• downloading (S220) said item of content delivered by a delivery server (dCDN) identified by the received address, said delivery being performed via a secure TLS (for "Transport Layer Security") connection based on a certificate of said domain name;
said determination (S230) of the validity of said received address with respect to said authentic address being implemented when said certificate is self-signed by said delivery server (dCDN) identified by the received address.

7. Method for verifying delegation of delivery of an item of content to a client terminal (UA), **characterized in that** it comprises the following steps implemented by a server (CSP) of the content provider:
• receiving (S2302a) at least one request sent by said client terminal (UA), said one request comprising a first address, called received address, of a delivery server;
• obtaining (S23021) an item of information allowing the client terminal (UA) to determine (S230) the validity of said received address with respect to a second address, called authentic address associated with said delivery server, said item of information corresponding to at least one data field positioned at a value indicating whether said received address is equal to said authentic address, and
• sending (S2302b) said item of information to said client terminal (UA).

8. Method according to Claim 7, wherein said item of information sent to the client terminal (UA) corresponds to said authentic address.

9. Method according to Claim 7, furthermore comprising:
• comparing (S23021c) said received address and said authentic address in order to deliver said item of information sent to the client terminal (UA).

10. Method according to any one of Claims 1 to 9, wherein said delivery is delegated by said delivery server (uCDN) to at least one secondary delivery server (dCDNa), the authentic address identifying said secondary delivery server (dCDNa) being stored in said delivery server (uCDN).

11. Method according to Claim 10, wherein said authentic address belongs to the group comprising:
• a predetermined address stored on said delivery server (uCDN);
• a predetermined address stored on said server (CSP) of the content provider;
• an address obtained by said server (CSP) of the content provider from said delivery server (uCDN) for said item of content; and
• an address obtained beforehand by said server (CSP) of the content provider from said delivery server (uCDN) for said item of content and updated periodically from said delivery server (uCDN).

12. Computer program product, comprising program code instructions for implementing a method according to any one of Claims 1 to 11 when said program is executed on a computer.

13. Device (300) for validating delivery of an item of content to a client terminal (UA),
comprising a reprogrammable computing machine (302) or a dedicated computing machine, able and configured so as to:
• receive a first address, called received address, in response to a request sent to an address server (LDNS, DNS) in order to obtain the address of a delivery server (uCDN) for delivering said item of content, the request comprising an item of information in relation to said delivery server;
**characterized in that** said reprogrammable computing machine (302) or said dedicated computing machine is furthermore able and configured so as to:
• send (S2302a) a request to a server (CSP) of the content provider comprising said received address identifying said delivery server (uCDN) in order to receive an item of information in relation to a second address, called authentic address, associated with said delivery server;
• receive (S2302b) said item of information sent by said server (CSP), said item of information corresponding to at least one data field positioned at a value indicating whether said received address is equal to said authentic address; and
• determine (S230) the validity of said received address with respect to said authentic address on the basis of said item of information in relation to the authentic address.

14. Device (400) for verifying delegation of delivery of an item of content to a client terminal (UA),
**characterized in that** it comprises a reprogrammable computing machine (402) or a dedicated computing machine able and configured so as to:
• receive (S2302a) at least one request sent by said client terminal (UA), said one request comprising a first address, called received address, of a delivery server;
• obtain (S23021) an item of information allowing the client terminal (UA) to determine (S230) the validity of said received address with respect to a second address, called authentic address associated with said delivery server, said item of information corresponding to at least one data field positioned at a value indicating whether said received address is equal to said authentic address; and
• send (S2302b) said item of information to said client terminal (UA).
